# EUROPÄISCHE PATENTSCHRIFT

(11) **EP 2 769 533 B1**
(45) Veröffentlichungstag und Bekanntmachung des Hinweises auf die Patenterteilung: **12.09.2018**
(21) Anmeldenummer: 12790438.1
(22) Anmeldetag: 19.10.2012
(51) Int. Cl.: H04M 1/725, G08B 25/10

(54) **ZENTRALEINHEIT ZUR ÜBERWACHUNG WENIGSTENS EINES SENSORS**
BASE STATION FOR MONITORING OF AT LEAST ONE SENSOR
STATION DE BASE POUR LA SURVEILLANCE AU MOINS UN SENSOR

(30) Priorität: 19.10.2011 DE 102011054624
(43) Veröffentlichungstag der Anmeldung: 27.08.2014
(73) Patentinhaber: Gigaset Communications GmbH, 40549 Düsseldorf (DE)
(72) Erfinder: KAMPERSCHROER, Erich, 46499 Hamminkeln (DE); GOERTZ, Werner, 46282 Dorsten (DE); ORD, Nicholas, 81337 München (DE)
(74) Vertreter: Michalski Hüttermann & Partner Patentanwälte mbB
(86) Internationale Anmeldenummer: PCT/EP2012/070746
(87) Internationale Veröffentlichungsnummer: WO 2013/057243

(56) Entgegenhaltungen:
- EP-A1- 1 467 548
- WO-A1-02/100081
- WO-A1-2005/038738
- DE-A1- 19 637 731
- DE-A1-102010 014 585
- DE-U1- 29 611 601

## Beschreibung

Die vorliegende Erfindung betrifft eine Zentraleinheit zur Überwachung wenigstens eines Sensors, wobei die Zentraleinheit ein DECT-Modul zum Empfang einer Überwachungsmeldung von dem Sensor nach dem DECT-Standard aufweist, die Zentraleinheit wenigstens einen Telekommunikationsanschluss zur Verbindung mit wenigstens einen Telekommunikationsdienstleister und einen Speicher für Verbindungsparameter für den Aufbau einer Notrufverbindung zu einer Gegenstelle über den wenigstens einen Telekommunikationsdienstleister umfasst, wobei die Zentraleinheit ausgeführt ist, beim Empfang der Überwachungsmeldung die Notrufverbindung mit den Verbindungsparametern aufzubauen.

Derartige Zentraleinheiten werden beispielsweise zur Überwachung von Sensoren in Alarmanlagen, Sensoren für die Überwachung des Gesundheitszustands von hilfsbedürftigen Personen und/oder Sensoren zur Erfassung von Gefahrensituationen und/oder Unfällen verwendet. Üblicherweise wird die Zentraleinheit in einer Wohnung oder einem Haus verwendet, wo sie in einem Bereitschaftszustand auf die Übertragung einer Überwachungsmeldung von einem zugehörigen Sensor wartet. Als Reaktion auf den Empfang der Überwachungsmeldung wird eine vorgegebene Aktion ausgeführt, die üblicherweise den Aufbau einer Notrufverbindung beinhaltet. Im Falle einer Alarmanlage wird durch den Empfang einer Überwachungsmeldung von einem Einbruchssensor ein Alarm ausgelöst, was beispielsweise die Ansteuerung einer Sirene in der Wohnung oder dem Haus sowie eine automatische Übermittlung einer Nachricht an eine Notrufzentrale als Gegenstelle bewirkt. Auf ähnliche Weise wird bei Sensoren zur Überwachung des Gesundheitszustands von hilfsbedürftigen Personen, beispielsweise wenn die hilfsbedürftige Person die Übermittlung der Überwachungsmeldung über einen Knopf, ein Alarm ausgelöst und/oder eine Mitteilung an eine entsprechende medizinische Zentrale als Gegenstelle über die Telekommunikationsverbindung versandt. Eine Gefahrensituation liegt beispielsweise vor, wenn ein Brandsensor ein Feuer detektiert und eine Überwachungsmeldung an die Zentraleinheit sendet, woraufhin eine Notrufverbindung zu einer Feuerwehrzentrale als Gegenstelle aufgebaut wird.

Als Telekommunikationsdienstleister ist dabei ein jeweiliger Anbieter von Telekommunikationsdienstleistungen zu verstehen, also eine Anbieter für den Aufbau von Telekommunikationsverbindungen. Für Festnetzverbindungen wird dabei praktisch kaum wahrgenommen, welcher Telekommunikationsdienstleister die Dienstleistungen anbietet, da eine Konfiguration über das Einstecken eines Telefons in eine Telefonanschlussdose geschieht. Prinzipiell besteht jedoch auch hier die Möglichkeit, durch die Verwendung eines Präfixes einen bestimmten Telekommunikationsdienstleister explizit auszuwählen. Beim Aufbau von Telekommunikationsverbindungen über IP-Netze, auch bekannt als Voice-over-IP (VoIP), ist jedoch eine explizite Auswahl des Telekommunikationsdienstleister erforderlich, was oft eine Anmeldung mit einer Identifikation für den Telekommunikationsdienstleister und einem Passwort beinhaltet.

Zur Übermittlung der Überwachungsmeldung von dem Sensor an die Zentraleinheit sind verschiedene Übertragungstechniken bekannt, die eine zuverlässige Übertragung der Überwachungsmeldung zu gewährleisten. So ist beispielsweise aus der DE 196 34 675 A1 eine funkgesteuerte Gefahrenmeldeanlage mit einer Signalmeldeeinheit bekannt, die an eine DECT-Basisstation als Mobilteil angeschlossen wird. Überwachungsmeldungen der Sensoren werden über Funkverbindungen nach dem DECT-Standard an die DECT-Basisstation und weiter an die Gefahrenmeldeanlage übertragen.

Nachteilig hieran ist, dass für den zusätzlichen Anschluss der Gefahrenmeldeanlage eine umfangreiche Installation der Sensoren und der Gefahrenmeldeanlage erforderlich ist, die schwierig durchzuführen ist. Außerdem wird die Anzahl der zu installierenden Geräte erhöht, wodurch der erforderliche Platzbedarf erhöht und die Bedienung hinsichtlich der Telefonfunktion wie auch der Zentraleinheit erschwert wird. Entsprechende Geräte weisen eine geringe Akzeptanz durch einen Nutzer auf. Weiterhin ist die Konfiguration sowohl der Zentraleinheit wie auch der DECT-Basis separat durchzuführen, sodass beispielsweise Verbindungsparameter mehrfach angegeben werden müssen, was sehr mühsam und zeitaufwändig ist. Nachteilig ist weiterhin, dass die Gefahrenmeldeanlage durch den Anschluss als Mobilteil an die DECT-Basisstation Ressourcen Basis bindet. Damit wird die normale Verwendung der DECT-Basisstation einschränkt, da weniger Mobilteile mit der DECT-Basisstation verwendet werden können. Außerdem ist die Verwendung einer besonders angepassten DECT-Basis erforderlich, um beispielsweise die Verbindung der Gefahrenmeldeanlage mit einer Notrufzentrale bei bestehenden Telekommunikationsverbindungen priorisieren zu können.

Aus der DE 296 11 601 U1 ist eine zentrale Einheit, die mit einer Mehrzahl dezentralen Sensoren über eine DECT-Verbindung verbunden sind. Zusätzlich ist die zentrale Einheit mit einer zusätzlichen Sende- und Empfangseinrichtung nach dem DECT-Standard ausgeführt zur Verbindung mit einer Telefoneinrichtung. Die Sende- und Empfangseinrichtung zur Herstellung einer Funkverbindung zu der Telefoneinrichtung ist in der Form eines schnurlosen Telefons ausgeführt zur Verbindung mit einer Leitzentrale.

Aus der EP 1 467 548 A1 ist ein DECT-Adapter bekannt, der mit einer Türsprechanlage verbunden wird. Die Türsprechanlage mit dem DECT-Adapter ist über eine Feststation mit einem öffentlichen Netz verbunden. Der DECT-Adapter kann dabei als Relay Station betrieben werden.

Aus der WO 2005/038738 A1 ist ein Heimnetzwerk mit einer Basisstation und einer Mehrzahl Sensoren bekannt. Die Basisstation ist mit einer Kommunikationsschnittstelle zur Verbindung mit dem Internet ausgeführt. Die Sensoren sind mit der Basisstation verbunden, wobei das Netzwerk, welches Basisstation und Sensoren verbindet, ein adhoc-Netz mit Multihop-Funktionalität ist.

Aus der WO 02/100081 A1 ist ein Heimnetzwerk mit einer DECT-Basisstation und einer Mehrzahl Sensoren bekannt, wobei die Sensoren ein DECT-Modul und ein Gerät umfassen. Die Basisstation ist an ein öffentliches Telefonnetz angeschlossen, so dass Zustände der Sensoren abgefragt und beeinflusst werden können.

Ausgehend von dem vorgenannten Stand der Technik ist es daher Aufgabe der Erfindung, eine Zentraleinheit zur Überwachung wenigstens eines Sensors anzugeben, die eine einfache Kombination mit Telefonfunktionen erlaubt, eine einfache und effiziente Konfiguration von Sensoren und Aktionen, die beim Empfang einer Überwachungsmeldung eines Sensors ausgeführt werden sollen, ermöglicht, die einfach in eine bestehende Telefonanlage nach dem DECT-Standard integrierbar ist, die wenig Ressourcen benötigt und die effizient und bedienerfreundlich zu benutzen ist.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit eine Zentraleinheit zur Überwachung wenigstens eines Sensors angegeben, wobei die Zentraleinheit als Basisstation nach dem DECT-Standard ausgeführt ist, die Zentraleinheit ein DECT-Modul zum Empfang einer Überwachungsmeldung von dem Sensor nach dem DECT-Standard aufweist, wobei die Zentraleinheit ausgeführt ist, die Überwachungsmeldung unmittelbar von dem Sensor zu empfangen, die Zentraleinheit wenigstens einen Telekommunikationsanschluss zur Verbindung mit wenigstens einem Telekommunikationsdienstleister und einen Speicher für Verbindungsparameter für den Aufbau einer Notrufverbindung zu einer Gegenstelle über den wenigstens einen Telekommunikationsdienstleister umfasst, wobei die Zentraleinheit ausgeführt ist, beim Empfang der Überwachungsmeldung die Notrufverbindung mit den Verbindungsparametern aufzubauen, und die Zentraleinheit mit wenigstens einem Mobilteil nach dem DECT-Standard verbindbar und eingerichtet ist, eine Telekommunikationsverbindung zwischen dem Mobilteil und einer über den wenigstens einen Telekommunikationsanschluss verbindbaren Gegenstelle aufzubauen.

Grundidee der vorliegenden Erfindung ist es also, die Zentraleinheit gleichzeitig als Basisstation nach dem DECT-Standard auszuführen, so dass die Zentraleinheit volle Kontrolle über alle Überwachungsfunktionen sowie über alle Telefonfunktionen hat. Sowohl Mobilteile wie auch Sensoren sind dabei unmittelbar mit der Zentraleinheit verbunden. Unmittelbar bedeutet in diesem Zusammenhang, dass die Mobilteile und Sensoren mit der Zentraleinheit gekoppelt sind und ausschließlich mit der Zentraleinheit kommunizieren. Dies kann die Verwendung von Repeatern oder Range Extendern umfassen, die unter Beibehaltung der Kopplung eines Mobilteils oder eines Sensors mit der Zentraleinheit die Verbindung auch von entfernten Sensoren oder Mobilteilen ermöglicht. Durch die Integration der Funktionen in der Zentraleinheit ist ohne Weiteres ein Priorisieren von Telekommunikationsverbindungen möglich, um beim Empfang der Überwachungsmeldung unmittelbar eine Notrufverbindung aufbauen zu können, beispielsweise um eine Notrufzentrale als Gegenstelle zu kontaktieren. Die Zentraleinheit kann dazu beispielsweise bestehende Telekommunikationsverbindungen unterbrechen, um die Notrufverbindung aufbauen zu können. Die geringe Anzahl erforderlicher Geräte trägt zur Akzeptanz durch einen Benutzer bei. Durch die Integration der Funktion in der Zentraleinheit ist nur ein geringer Installationsaufwand erforderlich, da nur ein Zentralgerät installiert und konfiguriert werden muss. Dies betrifft insbesondere die nur einmalige Installation des Telekommunikationsanschlusses zur Verbindung mit dem Telekommunikationsdienstleister, die ausreichend ist, um sowohl die Funktion der DECT-Basiseinheit wie auch der Zentraleinheit zur Sensorüberwachung durchzuführen. Der Telekommunikationsanschluss ist ein beliebiger Telekommunikationsanschluss, beispielsweise zur Verbindung mit dem Festnetz. Wenn die Zentraleinheit eine Mehrzahl Telekommunikationsanschlüsse aufweist werden vorzugsweise die Telekommunikationsverbindung und die Notrufverbindung unabhängig über einen der Telekommunikationsanschlüsse aufgebaut. Ein Telekommunikationsanschluss ist vorzugsweise für den Aufbau einer Notruf- oder Telekommunikationsverbindung über eine Mehrzahl Telekommunikationsdienstleister ausgeführt. Der Begriff "Notrufverbindung" bedeutet, dass eine Telekommunikationsverbindung zu einer besonderen, vorgebbaren Gegenstelle aufgebaut wird, ohne dass die Telekommunikationsverbindung besonders ausgestaltet oder konfiguriert ist. Prinzipiell kann die Notrufverbindung auch eine besondere Telekommunikationsverbindung ausschließlich für die Notrufverbindung sein. Die Notrufverbindung ist dadurch charakterisiert, dass sie als Reaktion auf den Empfang wenigstens einer Überwachungsmeldung von wenigstens einem Sensor aufgebaut wird, unabhängig von der Art des Sensors und der Überwachungsmeldung. Die Telekommunikationsverbindung wird beim Empfang der Überwachungsmeldung vorzugsweise als bidirektionale Telekommunikationsverbindung zu der Gegenstelle aufgebaut. Dies ermöglicht es, Informationen von der Gegenstelle zu empfangen. Die Telekommunikationsverbindung ist somit zur Quittierung des erfolgreichen Aufbaus der Notrufverbindung geeignet. Als Sensor kann ein beliebiger Einbruchssensor, ein für die Überwachung des Gesundheitszustands von hilfsbedürftigen Personen oder eine Sensor zur Erfassung von Gefahrensituationen und/oder Unfällen, beispielsweise ein Brandsensor, vorgesehen sein.

In vorteilhafter Ausgestaltung der Erfindung ist vorgesehen, dass die Zentraleinheit einen Telekommunikationsanschluss nach dem DECT-Standard zum Anschluss als Mobilteil an eine DECT-Basis umfasst. Somit lässt sich die Zentraleinheit auf einfache Weise in eine bestehende Installation einer Telefonanlage nach dem DECT-Standard integrieren, was den zusätzlichen Installationsaufwand gering hält. Durch die Möglichkeit der Weiterverwendung vorhandener DECT-Geräte, also der DECT-Basis oder vorhandener Mobilteile nach dem DECT-Standard, sind die Kosten für die zusätzliche Funktion der Sensorüberwachung gering. Die Weiterverwendbarkeit bekannter DECT-Geräte führt auch zu einer hohen Akzeptanz durch die Nutzer, da sie nicht den Umgang mit neuen Geräten erlernen müssen. Zusätzlich wird die Zentraleinheit unabhängig von einer vorhandenen Anschlussdose zur Verbindung mit dem Telekommunikationsanschluss, da durch die Verbindung mit der DECT-Basis die Positionierung der Zentraleinheit an einem praktisch beliebigen Ort innerhalb einer Wohnung oder eines Hauses möglich ist. Mobilteile und Sensoren sind ausschließlich mit der Zentraleinheit gekoppelt. Entsprechend erfolgt der Aufbau einer Telekommunikationsverbindung von einem Mobilteil über die Zentraleinheit, welche die Telekommunikationsverbindungüber die DECT-Basis mit der Gegenstelle aufbaut. Auch die Sensoren kommunizieren direkt mit der Zentraleinheit, so dass die Überwachungsmeldungen unmittelbar dort empfangen werden, was eine zuverlässige und schnelle Übermittlung der Überwachungsmeldung an die Zentraleinheit sicherstellt. Abhängig von der Positionierung der Zentraleinheit wird die Reichweite für angeschlossene Mobilteile und Sensoren ausgehend von der Anschlussdose, die üblicherweise die Position der DECT-Basis bestimmt, vergrößert.

In vorteilhafter Ausgestaltung der Erfindung ist vorgesehen, dass die Zentraleinheit einen Schlüsselspeicher aufweist, in dem für den Sensor ein Schlüssel speicherbar ist, und die Zentraleinheit ausgeführt ist, unter Verwendung des gespeicherten Schlüssels eine Authentisierung der Überwachungsmeldung durchzuführen. Durch die Verwendung des Schlüssels kann jede Überwachungsmeldung zuverlässig authentisiert werden, so dass sichergestellt wird, dass kein Fehlalarm, beispielsweise durch in anderen Wohnungen oder Häusern installierte Sensoren, und kein Missbrauch, beispielsweise durch das Absenden einer gefälschten Überwachungsmeldung an die Zentraleinheit, erfolgt. Zusätzlich kann vorgesehen sein, dass eine Verschlüsselung der Überwachungsmeldung mit an sich bekannten kryptographischen Methoden erfolgt, um unbefugten Dritten einen Zugang zu möglicherweise sicherheitsrelevanten Informationen zu verwehren. Der Schlüssel wird dann auch zum Entschlüsseln der Überwachungsmeldung verwendet. In einer alternativen Ausführungsform wird ein separater Schlüssel für die Verschlüsselung verwendet.

Alternativ oder zusätzlich ist der Schlüsselspeicher zur Speicherung eines Verbindungsschlüssels für eine Authentisierung der Notrufverbindung ausgeführt, und die Zentraleinheit ist ausgeführt, unter Verwendung des gespeicherten Verbindungsschlüssels eine Authentisierung der Notrufverbindung durchzuführen. Prinzipiell ist es auch möglich, die Notrufverbindung unter Verwendung eines Verbindungsschlüssels zu verschlüsseln und/oder zumindest die übertragene Information kryptographisch zu signieren, wobei Verbindungsschlüssel für Authentisierung und Verschlüsselung bzw. Signierung unterschiedlich sein können. Die Gegenstelle benötigt einen korrespondierenden Schlüssel, mit dem sie zuverlässig die Authentizität der Notrufverbindung überprüfen kann. Zwar sind verschlüsselte Telekommunikationsverbindungen als Sprach- oder Datenverbindungen bekannt, allerdings sind standardisierte Authentisierungs- und/oder Verschlüsselungsverfahren, beispielsweise die Verwendung von https, nicht immer verfügbar. Dieses Problem kann durch die Verwendung des individuellen Verbindungsschlüssels gelöst werden.

In weiterer Ausgestaltung der Erfindung ist vorgesehen, dass die Zentraleinheit ausgeführt ist, eine zusätzliche Notrufverbindung zu dem Mobilteil aufzubauen. Diese anlageninterne Notrufverbindung ermöglicht es, vorhandene Mobilteile effizient in die Sensorüberwachung einzubeziehen, indem zu einzelnen oder allen an die Zentraleinheit angeschlossenen Mobilteilen eine Notrufverbindung aufgebaut wird. Dies ist besonders vorteilhaft, da die Sensoren in dem Haus oder der Wohnung einen Bereich abdecken, in dem sich die Mobilteile befinden, sodass sich eine Überdeckung eines durch verbundene Sensoren definierten Gefahrenbereichs mit einem durch verbundene Mobilteile definierten Telekommunikationsbereichs ergibt. Im Fall eines Feuers in einer von der Zentraleinheit überwachten Wohneinheit, das heißt wenn ein Brand- oder Rauchsensor eine entsprechende Überwachungsmeldung an die Zentraleinheit sendet, sind Personen in der Wohneinheit unmittelbar gefährdet, so dass sie über die Mobilteile über die Gefahrensituation, d.h. den Brand, informiert werden können. Entsprechend ist es beispielsweise für die Überwachung des Gesundheitszustands einer hilfsbedürftigen Person mit einem entsprechenden Gesundheitssensor vorteilhaft, wenn bei einer Übermittlung der Überwachungsmeldung an die Zentraleinheit nicht nur ein Notrufverbindung mit der medizinischen Notrufzentrale aufgebaut wird, sondern auch in dem Haus oder der Wohnung befindliche Personen über Mobilteile informiert werden, so dass diese sich unmittelbar um die hilfsbedürftige Person kümmern können. Da die vorhandenen Mobilteile oft von dem Nutzer mitgetragen werden, kann auf effiziente Weise eine Notrufverbindung aufgebaut werden, ohne dass eine zusätzliche Infrastruktur erforderlich ist.

In weiterer Ausgestaltung der Erfindung ist vorgesehen, dass die Zentraleinheit ausgeführt ist, eine Telekommunikationsnachricht über die Notrufverbindung zu versenden. Die Telekommunikationsnachricht kann eine beliebige Nachricht sein, beispielsweise eine Textnachricht, die in kodierter Form oder im Klartext Informationen enthalten, die über die Notrufverbindung übertragen werden. Diese Informationen können Informationen über die Art des Sensors, der die Überwachungsmeldung versendet hat, ein Sensormesswert oder beliebige andere Information beinhalten. Die Telekommunikationsnachricht kann als Sprach- oder Textnachricht ausgeführt sein. Der Versand einer solchen Telekommunikationsnachricht kann schnell und einfach erfolgen. Vorzugsweise erfolgt der Versand der Telekommunikationsnachricht als Textnachricht in der Form einer SMS oder einer Email. Weiter bevorzugt können Textnachrichten über beliebige Messaging-Dienste oder an Netzdienste erfolgen. Netzdienste, wie Google Latitude, können beispielsweise zur Auswertung in einer Notrufzentrale automatisch eine graphische Zuordnung der Zentraleinheit, von der die Notrufverbindung aufgebaut wird, mit einer Kartenansicht erzeugen, um eine Koordination von Hilfsmaßnahmen effizient durchführen zu können. Auch hier kann die übertragene Nachricht authentisiert und/oder verschlüsselt sein. Entsprechend kann die Zentraleinheit ausgeführt sein, eine Telekommunikationsnachricht über die zusätzliche Notrufverbindung zu dem wenigstens einen Mobilteil zu versenden.

Gemäß einer bevorzugten Ausgestaltung der Erfindung ist vorgesehen, dass die Zentraleinheit eine Speichereinheit für die Speicherung einer Mehrzahl Überwachungsgruppen aufweist, der Sensor einer Überwachungsgruppe zuordenbar ist, und die Zentraleinheit ausgeführt ist, den Aufbau der Notrufverbindung in Abhängigkeit von der Überwachungsgruppe des Sensors durchzuführen. Durch die Verwendung der Überwachungsgruppen ist es möglich, eine Vielzahl von Sensoren auf effiziente Weise zu überwachen. Verschiedenartige Sensoren, die eine ähnliche Funktion haben, können somit die gleiche Reaktion der Zentraleinheit zum Aufbau einer Notrufverbindung bewirken. Beispielsweise können Einbruchssensoren, die Glasbruchsensoren, Bewegungsmelder, Infrarotsensoren und Ähnliches umfassen, in einer entsprechenden Überwachungsgruppe zusammengefasst werden. Die Überwachungsmeldung von einem beliebigen der Sensoren dieser Überwachungsgruppe zeigt dabei einen Einbruch an. Der Aufbau der Notrufverbindung ist somit effizient möglich, da nicht für jeden Sensor einzeln festgelegt werden muss, wie die Notrufverbindung aufgebaut werden soll. Gleichzeitig ermöglicht die Verwendung der Überwachungsgruppen eine hohe Flexibilität und die Verwendung unterschiedlicher Sensoren zur Überwachung verschiedenster Funktionen mit einer Zentraleinheit, da nur für die Überwachungsgruppen jeweils eine geeignete Notrufverbindung definiert und aufgebaut werden muss. Entsprechend kann bei dem Empfang der Überwachungsmeldung von einem Sensor einer Überwachungsgruppe Einbruch unmittelbar eine Notrufverbindung zu der Polizei aufgebaut werden, wohingegen die Überwachungsmeldung eines Gesundheitssensors den Aufbau der Notrufverbindung zu einem medizinischen Dienst bewirkt. Die Überwachungsgruppen erlauben eine flexible Verwendung der Zentraleinheit, da verschieden Sensoren überwacht werden können und jeweils eine geeignete Notrufverbindung aufgebaut wird. Entsprechend kann die Zentraleinheit ausgeführt sein, den Aufbau der weiteren Notrufverbindung in Abhängigkeit von der Überwachungsgruppe des Sensors durchzuführen.

In weiterer Ausgestaltung der Erfindung ist vorgesehen, dass die Zentraleinheit ausgeführt ist, eine Rückverbindung zu dem Sensor aufzubauen. Die Rückverbindung ermöglicht es, den Sensor zu konfigurieren, zu warten und/oder zu überwachen. Die Konfiguration des Sensors umfasst Aufgaben wie das Setzen von Grenzwerten zum Senden der Überwachungsnachricht. Unter Wartung fällt eine Überprüfung der Betriebsfähigkeit des Sensors. Entsprechend kann beispielsweise ein Selbsttest in dem Sensor durchgeführt werden, oder es wird auf eine Nachricht auf eine Wartungsanfrage gewartet, um die Betriebsbereitschaft des Sensors zu überprüfen. Die Überwachung des Sensors umfasst die Überwachung eines Batteriezustandes oder die Abfrage eines aktuellen Sensormesswertes.

Gemäß einer bevorzugten Ausführungsform der Erfindung ist vorgesehen, dass die Zentraleinheit ausgeführt ist, die Rückverbindung als Reaktion auf den Empfang der Überwachungsmeldung aufzubauen. Die Rückverbindung ist bevorzugt als Sprechverbindung ausgeführt, um eine Kommunikation mit einer in Nähe des Sensors befindlichen Person durchführen zu können. Die Kommunikation erfolgt bevorzugt von dem Sensor über die Notrufverbindung, so dass beispielsweise eine Person in einem Gefahrenbereich, beispielsweise bei einem Feuer oder einem medizinischen Notfall, unmittelbar mit Hinweisen zu einem vorteilhaften Verhalten versorgt werden kann. Darüber hinaus ist eine Sprechverbindung in einer Notfallsituation geeignet, um eine Person in dieser Notfallsituation zu beruhigen, so dass eine zusätzliche Gefahr, beispielsweise durch eine Panikreaktion, reduziert und die subjektive Wahrnehmung der Gefahrensituation verbessert werden kann. Über die Rückverbindung kann eine Rückmeldung von der Zentraleinheit über den Empfang der Überwachungsmeldung erfolgen. Dies ist im elementarsten Fall eine Statusnachricht, die anzeigt, dass die Überwachungsmeldung des Sensors von der Zentraleinheit empfangen wurde. Darüber hinaus kann eine Rückmeldung über den erfolgreichen Aufbau der Notrufverbindung erfolgen, so dass über den Sensor einen Fortschritt des Aufbaus der Notrufverbindung erfolgen kann. Bevorzugt wird eine Nachricht über die Rückverbindung an den Sensor, der die Überwachungsmeldung an die Zentraleinheit gesendet hat, gesendet. Die Nachricht kann kodierte Informationen oder eine Information im Klartext enthalten, die beispielsweise an einem Sensor zur Überwachung von dem Gesundheitszustand einer Person angezeigt werden kann. Bevorzugt wird eine Nachricht über die Notrufverbindung an die Zentraleinheit gesendet und von dort an den Sensor weiter übertragen.

In vorteilhafter Ausgestaltung der Erfindung ist vorgesehen, dass die Zentraleinheit eine Speichereinheit für die Speicherung einer Kontaktliste mit wenigstens einem Kontakt, der wenigstens einen Kontaktparameter für den Aufbau der Telekommunikationsverbindung aufweist, umfasst und ausgeführt ist, den Kontaktparameter als Verbindungsparameter für den Aufbau der Notrufverbindung zu verwenden. Dies ermöglicht eine einfache Konfiguration der Zentraleinheit, um die Notrufverbindung aufzubauen, da vorhandene Verbindungsparameter weiterverwendet werden können und nicht erneut eingegeben werden müssen. Verbindungsparameter können den Kontakten unmittelbar entnommen werden, oder ein Kontakt wird als Verbindungsparameter für den Aufbau der Notrufverbindung festgelegt, sodass die Zentraleinheit automatisch geeignete Verbindungsparameter des Kontakts auswählt. So können beispielsweise einem Sensor zur Überwachung des Gesundheitszustands einer hilfsbedürftigen Person Familienangehörige aus der Kontaktliste für den Aufbau der Notrufverbindung zugeordnet werden. Darüber hinaus kann von dem Mobilteil unter Verwendung derselben Kontaktliste eine Telekommunikationsverbindung zu diesen Personen aufgebaut werden. Eine separate Speicherung von redundanten Informationen entfällt. Vorzugsweise werden auch vorhandene Mobilteile über die Kontaktliste erfasst und einem Kontakt zugeordnet. Somit kann auch der Aufbau der zusätzlichen Notrufverbindung über Kontaktparameter wie zuvor beschrieben durchgeführt werden.

Gemäß einer bevorzugten Ausführungsform der vorliegenden Erfindung ist vorgesehen, dass die Mehrzahl Verbindungsparameter einer Mehrzahl Telekommunikationsdienstleistern zugeordnet ist, und die Zentraleinheit ausgeführt ist, die Notrufverbindung über unterschiedliche Telekommunikationsdienstleister aufzubauen. Abhängig von vorhandenen Telekommunikationsanschlüssen der Zentraleinheit kann die Auswahl des Telekommunikationsdienstleisters und der entsprechenden Verbindungsparameter nach unterschiedlichen Kriterien erfolgen. Durch die Möglichkeit des Aufbaus der Notrufverbindung über verschiedene Telekommunikationsdienstleister wird eine Redundanz geschaffen, so dass auch bei Ausfall eines Telekommunikationsdienstleisters der Aufbau der Notrufverbindung sichergestellt ist. Wenn nur Verbindungsparameter für einen Telekommunikationsdienstleister vorliegen, kann die Notrufverbindung entsprechend immer über diesen Telekommunikationsdienstleister aufgebaut werden.

In einer bevorzugten Ausgestaltung der Erfindung ist vorgesehen, dass jedem Kontaktparameter eine Identifikation des Telekommunikationsdienstleisters zugeordnet ist und die Zentraleinheit ausgeführt ist, den Aufbau der Notrufverbindung unter Berücksichtigung der Identifikation des Telekommunikationsdienstleisters durchzuführen. Somit können Kontaktparameter, die einem netzbasierten Telekommunikationsdienstleister anstelle einer sonst üblichen Telefonnummer zugeordnet sind, automatisch verwendet werden, um die Notrufverbindung über den entsprechenden Telekommunikationsdienstleister und den Telekommunikationsanschluss der Zentraleinheit korrekt aufzubauen. Üblicherweise wird über das Festnetz eine hohe Zuverlässigkeit und Ausfallsicherheit erreicht, so dass Verbindungen über das Festnetz bevorzugt ausgewählt werden können. Dies betrifft insbesondere Notrufzentralen, die permanent besetzt sind. Für den Aufbau der Notrufverbindung zu Familienangehörigen kann es vorteilhaft sein, als Verbindungsparameter eine Mobilfunknummer über das Festnetz zu wählen. Personen, die sich über den Tag an verschiedenen Orten aufhalten, können so zuverlässig erreicht werden. Auch eine dynamische Auswahl der Verbindungsparameter, beispielsweise abhängig von der Uhrzeit, ist möglich. So kann zu üblichen Bürozeiten eine Büronummer einer Person gewählt werden, während nach Feierabend die Heimnummer zum Aufbau der Notrufverbindung verwendet wird. Andere Auswahlkriterien umfassen Sprachqualität und Kosten für den Aufbau der Notrufverbindung. Insbesondere Telekommunikationsdienstleister, die Voice-over-IP-Verbindungen oder andere netzbasierte Kommunikationsdienste anbieten, zeigen häufig einen Präsenzstatus einer Person an, wenn diese Person mit dem entsprechenden Dienst verbunden ist. Beim Vorhandensein eines derartigen Präsenzstatus ist somit die Wahrscheinlichkeit für das erfolgreiche Zustandekommen der Notrufverbindung hoch, so dass eine entsprechende Verbindung bevorzugt ausgewählt werden kann.

In weiterer Ausgestaltung der Erfindung ist vorgesehen, dass die Zentraleinheit ausgeführt ist, die Notrufverbindung mit einer Mehrzahl Verbindungsparameter aufzubauen. Dies umfasst den parallelen Aufbau der Notrufverbindung zu verschiedenen Gegenstellen, wobei parallel bedeutet, dass zu den verschiedenen Gegenstellen unabhängig voneinander eine Notrufverbindung aufgebaut wird, auch wenn die Notrufverbindungen nacheinander aufgebaut werden. Alternativ oder zusätzlich kann vorgesehen sein, dass für den Aufbau der Notrufverbindung eine Liste mit Verbindungsparametern angelegt wird, die alternativ nacheinander verwendet werden, falls keine Notrufverbindung mit den ausgewählten Verbindungsparametern aufgebaut werden kann. Wenn der Aufbau der Notrufverbindung nicht erfolgreich ist, zum Beispiel weil eine Gegenstelle kommuniziert oder nicht antwortet, kann so der Aufbau einer Notrufverbindung mit anderen Verbindungsparametern gestartet werden. Dies kann umfassen, dass eine Notrufverbindung mit demselben Kontakt aber anderen Kontaktparametern durchgeführt wird. Auch kann, beispielsweise in dem Fall, dass die Gegenstelle, zu der die Notrufverbindung aufgebaut werden soll, sich in einer aktiven Kommunikation befindet, lediglich eine Nachricht, beispielsweise eine SMS, an diese Gegenstelle versendet wird.

In weiterer Ausgestaltung der Erfindung ist vorgesehen, dass die Zentraleinheit eine grafische Benutzerschnittstelle aufweist und ausgeführt ist, die Zentraleinheit und/oder den Sensor über die grafische Benutzerschnittstelle zu verwalten. Dies ermöglicht eine einfache Verwaltung der Zentraleinheit und/oder des Sensors. Insbesondere ermöglicht die graphische Benutzerschnittstelle eine einfache Kombination von Sensoren bzw. Überwachungsgruppen mit Kontakten oder Kontaktparametern, indem Sensoren bzw. Überwachungsgruppen auf Kontakte oder Kontaktparameter gezogen werden, oder umgekehrt. Für einen einzelnen Sensor oder eine einzelne Überwachungsgruppe kann ebenfalls grafisch festgelegt werden, ob zu verschiedenen Kontakten parallel oder sequentiell eine Notrufverbindung aufgebaut werden soll. Dazu können mehrere Kontakte oder Kontaktparameter nebeneinander angeordnet werden für den Aufbau von parallelen Notrufverbindungen, oder untereinander für den sequentiellen Aufbau der Notrufverbindung. Die Reihenfolge der sequentiellen Anordnung gibt dabei die Reihenfolge für den Aufbau der Notrufverbindung wieder. Auch die Zuordnung von Sensoren zu Überwachungsgruppen kann durch einfaches Ziehen eines Sensors in die Überwachungsgruppe erfolgen.

In weiterer Ausgestaltung der Erfindung ist vorgesehen, dass die Zentraleinheit mit einer Datenkommunikationseinheit ausgeführt ist, die Telekommunikationsverbindung zu wenigstens einem Telekommunikationsdienstleister über die Datenkommunikationseinheit aufzubauen. Entsprechend können Datennachrichten über die Notrufverbindung versendet werden, beispielsweise in der Form einer E-Mail oder Nachrichten eines Messaging-Dienstes. Die Datenübertragung ist eine kosteneffiziente Möglichkeit, die Notrufverbindung aufzubauen. Vorzugsweise ist vorgesehen, dass die Zentraleinheit zusätzlich eine Umsetzungseinheit umfasst, um über die Datenkommunikationseinheit Sprachinformation zu senden und gegebenenfalls zu empfangen. Die Umsetzungseinheit ist beispielsweise als Applikation ausgeführt, die auf einer Hardware der Zentraleinheit ausgeführt wird. Derartige Applikationen umfassen Applikationen für Voice-over-IP-Telefonie oder Skype. Entsprechend kann über die Datenkommunikationseinheit eine Sprachkommunikation erfolgen.

In einer bevorzugten Ausführungsform der Erfindung ist vorgesehen, dass die Zentraleinheit zur Annahme einer eingehenden Telekommunikationsverbindung als Wartungsverbindung ausgeführt ist. Die Wartungsverbindung kann von einer beliebigen Gegenstelle ausgeführt werden, beispielsweise von einem PC oder Smartphone. Die Wartungsverbindung ermöglicht sowohl die Wartung der Zentraleinheit wie auch die Wartung einzelner Sensoren. Beispielsweise kann die Wartungsverbindung genutzt werden, um die Zentraleinheit für die Überwachung bestimmter Sensoren oder der Sensoren bestimmter Überwachungsgruppen zu aktivieren oder zu deaktivieren. So lässt sich beispielsweise eine Alarmanlagenfunktion aktivieren, indem alle Sensoren der Überwachungsgruppe Alarmanlage aktiviert werden. Die Wartung umfasst eine Abfrage aktueller Sensorparameter oder eines Sensorzustands.

In vorteilhafter Ausgestaltung der Erfindung umfasst die Zentraleinheit eine Basishardware und eine Basissoftware, wobei die Basissoftware ein Telefonbetriebssystem, insbesondere ein Android Betriebssystem, umfasst. Insbesondere im Bereich der Mobiltelefone hat das Android Betriebssystem in den letzten Jahren große Bedeutung gewonnen, da es eine einheitliche Schnittstellen bereitstellt und es ermöglicht, über einheitliche Applikationen bestimmte Funktionen auf Geräten verschiedener Hersteller nutzen zu können. Durch die Implementierung des Telefonbetriebssystems können viele Standardfunktionalitäten, die das Management der Telekommunikationsverbindung betreffen, auf einfache Weise in der Zentraleinheit genutzt werden. Entsprechend ist eine einfache Verwendung der Zentraleinheit als Internetzugangsgerät möglich. Auch kann das Mobilteil Funktionalitäten der Implementierung von Android in der Zentraleinheit nutzen, ohne dass eine zeit- und kostenintensive Implementierung entsprechender Funktionalitäten in jedem Mobilteil erforderlich ist. Als offenes Betriebssystem erlaubt Android das Hinzufügen von Softwarekomponenten und eine einfache Anpassung an unterschiedliche Hardware-Plattformen, um als Zentrale ein oder mehrere Mobilteile zu verwalten, Telekommunikationsverbindungen für die Mobilteile zu managen und Sensoren zu überwachen. Bevorzugt ist das Telefonbetriebssystem ein Android-Betriebssystem in der Version 3.0 oder höher, das für die Verwendung von großen Displays optimiert ist.

In weiterer Ausgestaltung der Erfindung umfasst die Basissoftware Treiber für den Telekommunikationsanschluss und das DECT-Modul, eine Funktionseinheit für das Management des Mobilteils und der Sensoren und eine Managementapplikation für die Steuerung der Funktionseinheit. DECT-spezifische Funktionen lassen sich auf diese Weise in ein Gerät mit Android-Betriebssystem integrieren. Der Aufwand für das Hinzufügen der DECTspezifischen Funktionen ist dabei aufgrund der Erweiterungsmöglichkeiten von Android-Betriebssystemen gering. Die Funktionseinheit und die Managementapplikation können dabei jeweils eine Mehrzahl unabhängiger Applikationen umfassen.

Nachfolgend wird die Erfindung unter Bezugnahme auf die anliegende Zeichnung anhand bevorzugter Ausführungsformen näher erläutert.

Es zeigen
- Fig. 1: eine schematische Ansicht einer Zentraleinheit gemäß einer Ausführungsform der Erfindung in Verbindung mit Mobilteilen, Sensoren, einer DECT-Basis und einem Internetzugangsknoten,

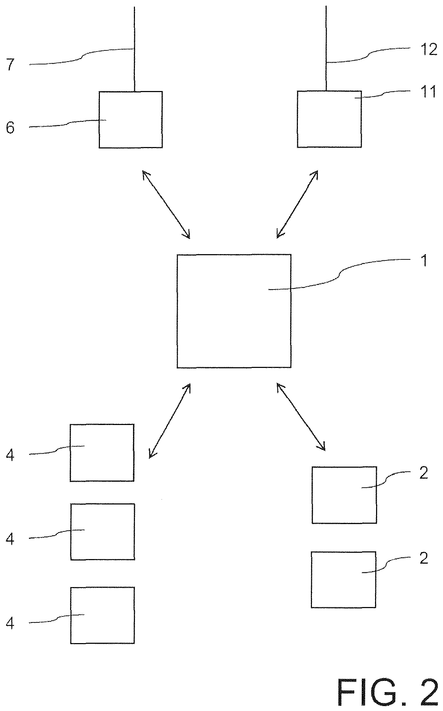

- Fig. 2: eine schematische Darstellung der Zentraleinheit im Detail,
- Fig. 3: eine schematische Darstellung einer graphischen Benutzerschnittstelle der Zentraleinheit aus Figur 1, und
- Fig. 4: eine schematische Darstellung einer Betriebssoftware der Zentraleinheit aus Figur 1.

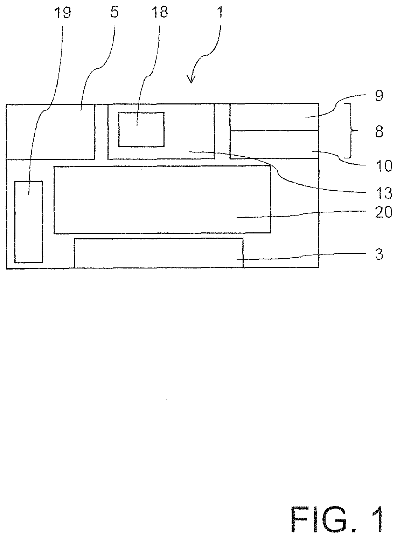

Die Figur 1 zeigt eine Zentraleinheit 1 zur Überwachung einer Mehrzahl Sensoren 2. Die Sensoren in diesem Ausführungsbeispiel umfassen Einbruchssensoren, einen Sensor für die Überwachung des Gesundheitszustands von einer hilfsbedürftigen Person und einen Sensor zur Erfassung von Gefahrensituationen und/oder Unfällen, der hier beispielhaft als Brandsensor ausgeführt ist. Die Zentraleinheit ist hier beispielhaft in einem Haus installiert.

Die Zentraleinheit 1 umfasst ein DECT-Modul 3 und ist als Basisstation nach dem DECT-Standard ausgeführt. Über das DECT-Modul 3 ist die Zentraleinheit 1 mit einer Mehrzahl Sensoren 2 und Mobilteile 4 verbunden. Die Zentraleinheit 1 umfasst einen Telekommunikationsanschluss 5 nach dem DECT-Standard, über den die Zentraleinheit 1 als Mobilteil an eine DECT-Basis 6 anschließbar ist, die über eine Telefonverbindung 7 mit einem nicht gezeigten Festnetz verbunden ist

Weiterhin umfasst die Zentraleinheit 1 einen Telekommunikationsanschluss 8 zur Verbindung über ein IP-Netz, der eine Datenkommunikationseinheit 9 und eine Umsetzungseinheit 10 umfasst. Die Datenkommunikationseinheit 9 ist in diesem Ausführungsbeispiel als WLAN-Modul zur Verbindung mit einem IP-Zugangspunkt 11 ausgeführt, der über eine Datenverbindung 12 mit dem hier nicht gezeigten Internet verbunden ist. In einer alternativen Ausführungsform wird die Verbindung mit dem IP-Zugangspunkt 11 schnurgebunden oder per Power-Over-Ethernet hergestellt. In diesem Ausführungsbeispiel ist der IP-Zugangspunkt 11 ein WLAN-Router uns die Umsetzungseinheit 10 ist eine Skype-Applikation, die in der Zentraleinheit 1 eine Umsetzung von Sprache auf die darunter liegende Datenverbindung 12 über die Datenkommunikationseinheit 9 durchführt.

Weiterhin umfasst die Zentraleinheit 1 eine Speichereinheit 13 für die Speicherung einer Kontaktliste 14 mit einer Mehrzahl Kontakte 15, wobei jeder Kontakt 15 wenigstens einen Kontaktparameter 16 umfasst, um eine Telekommunikationsverbindung aufzubauen. Die Kontaktparameter 16 sind jeweils einem Telekommunikationsdienstleister zugeordnet, um eine automatische Auswahl des Telekommunikationsdienstleister zu den jeweiligen Kontaktparametern 16 auswählen und eine Telekommunikationsverbindung aufbauen zu können.

Die Speichereinheit 13 ist außerdem zur Speicherung einer Mehrzahl Überwachungsgruppen 17 ausgeführt, denen wenigstens ein Sensor 2 und ein Kontakt 15 und/oder Kontaktparameter 16 aus der Kontaktliste als Verbindungsparameter 22 zugeordnet ist. Die Kontakte 15 und/oder Kontaktparameter 16 sind für jede Überwachungsgruppe 17 hierarchisch angeordnet.

Die Speichereinheit 13 ist außerdem integral mit einem Schlüsselspeicher 18 ausgeführt. In dem Schlüsselspeicher 18 ist für jeden Sensor 2 ein Schlüssel speicherbar, um eine Authentisierung des jeweiligen Sensors 2 durchzuführen.

Ferner umfasst die Zentraleinheit 1 eine Energieversorgungseinheit 19, die einen autarken Betrieb der Zentraleinheit 1 ermöglicht. In diesem Ausführungsbeispiel ist die Energieversorgungseinheit 19 ein wiederaufladbarer Akku.

Außerdem umfasst die Zentraleinheit 1 eine grafische Benutzerschnittstelle 20 für die Verwaltung der Zentraleinheit 1 und der Sensoren. Die grafische Benutzerschnittstelle 20 ist als berührungsempfindliches Display zur Bedienung über das Display ausgeführt.

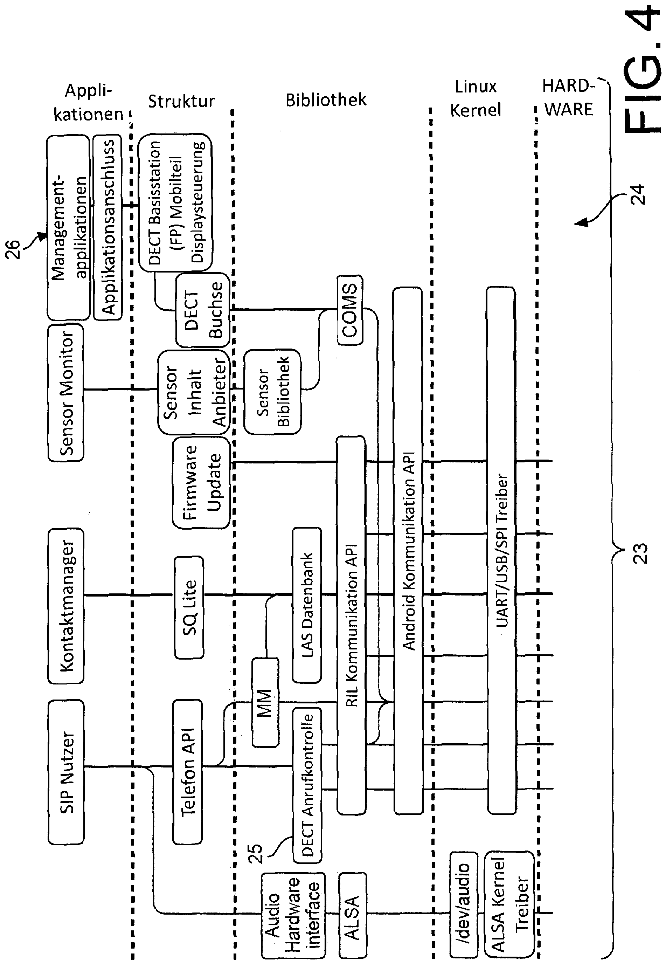

Insgesamt ist die Zentraleinheit 1 somit als schnurloses Gerät ausgeführt, vorzugsweise nach der Art eines WebPads oder eines Tablet-PC. Die Zentraleinheit 1 umfasst des Weiteren eine nicht gezeigte Basishardware und eine Basissoftware 23, die in Fig. 4 dargestellt ist. Die Basissoftware 23 ist in diesem Ausführungsbeispiel ein Android Betriebssystem in der Version 3.0. Die Basissoftware 23 umfasst nicht einzeln dargestellte Treiber in einer Treiberschicht 24, um die Telekommunikationsanschlüsse 5, 8 und das DECT-Modul 3 anzubinden. Weiterhin umfasst die Basissoftware 23 eine Funktionseinheit 25 für das Management der Mobilteile 4 und eine Managementapplikation 26 für die Steuerung der Funktionseinheit 25. Die Managementapplikation umfasst in diesem Ausführungsbeispiel eine Mehrzahl unabhängiger Applikationen.

Im Weiteren wird der Betrieb der Zentraleinheit 1 erläutert.

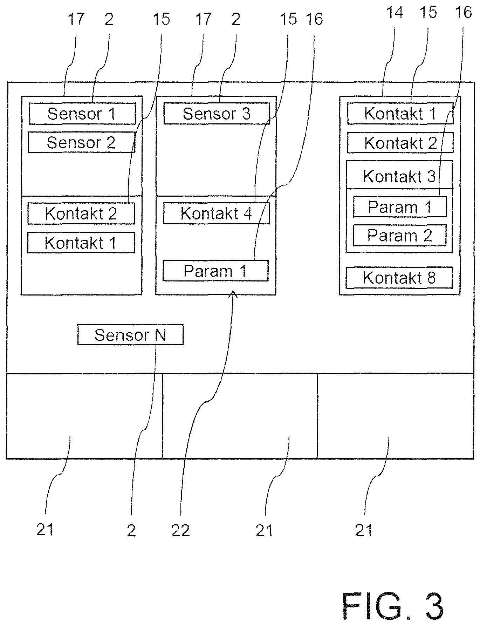

Die Verwaltung der Zentraleinheit 1 erfolgt über die in Fig. gezeigte graphische Benutzerschnittstelle 20. Wie in Figur 3 gezeigt ist, sind auf der graphischen Benutzerschnittstelle 20 hier beispielhaft zwei Überwachungsgruppen 17 mit diesen zugeordneten Sensoren 2 und Kontakten 15 dargestellt. Durch einfaches Ziehen des Sensors 2 in die gewünschte Überwachungsgruppe 17 erfolgen. Zusätzlich ist ein einzelner Sensor 2 dargestellt, der noch keiner Überwachungsgruppe 17 zugeordnet ist. Weiterhin ist die Kontaktliste 14 mit verfügbaren Kontakten 15 angezeigt, wobei zu jedem Kontakt 15 die verfügbaren Kontaktparameter 16 durch Antippen eines Kontakts 15 angezeigt werden können. Kontakt 15 und/oder Kontaktparameter 16 können als Verbindungsparameter 22 in die Überwachungsgruppen gezogen und darin hierarchisch angeordnet werden. Am unteren Rand der graphischen Benutzerschnittstelle 20 sind zusätzlich Symbole 21 für die verbundenen Mobilteile 4 angezeigt.

Im Telekommunikationsbetrieb wird von einem Mobilteil 4 der Aufbau einer Telekommunikationsverbindung über die Zentraleinheit 1 gestartet. Dazu wird von dem Mobilteil 4 ein Kontakt 15 in der Zentraleinheit 1 ausgewählt. Daraufhin führt die Zentraleinheit 1 den Aufbau der Telekommunikationsverbindung über einen der Telekommunikationsanschlüsse 5, 8 mittels eines zugehörigen Telekommunikationsdienstleisters zu einer gewünschten Gegenstelle durch. Die Gegenstelle ist durch den Kontakt 15 identifiziert. Die Zentraleinheit 1 wählt automatisch unter Berücksichtigung der Telekommunikationsanschlüsse 5, 8, der verfügbaren Telekommunikationsdienstleister und der verfügbaren Kontaktparameter 16 aus, wie die Telekommunikationsverbindung aufgebaut wird. Für eine eingehende Telekommunikationsverbindung über einen der Telekommunikationsanschlüsse 5, 8 gilt entsprechend, dass die Verbindung an eines oder mehrere der Mobilteile 4 signalisiert wird, um den Aufbau der Telekommunikationsverbindung abzuschließen. Die eingehende Telekommunikationsverbindung kann alternativ über die Zentraleinheit 1 durch Bedienung über die grafische Benutzerschnittstelle 20 einem Mobilteil 4 zugewiesen werden.

Die Zentraleinheit 1 ist weiterhin zur Annahme einer eingehenden Telekommunikationsverbindung als Wartungsverbindung ausgeführt. Die Telekommunikationsverbindung ist in diesem Ausführungsbeispiel eine Datenverbindung, die über die Datenkommunikationseinheit 9 des Telekommunikationsanschlusses 8 für die Verbindung über das IP-Netz aufgebaut wird. Über die Wartungsverbindung wird in diesem Ausführungsbeispiel die Zentraleinheit 1 zur Überwachung der verbundenen Sensoren 2 aktiviert.

Die Zentraleinheit 1 befindet sich permanent in einem Bereitschaftszustand, in dem sie auf die Übertragung einer Überwachungsmeldung von einem zugehörigen Sensor 2 wartet. Hier sendet Beispielhaft der als Brandsensor ausgeführte Sensor 2 eine Überwachungsmeldung an die Zentraleinheit 1. Der Brandsensor ist der entsprechenden Überwachungsgruppe 17 zugeordnet ist. Die Zentraleinheit 1 greift auf den Schlüsselspeicher 18 zu, um unter Verwendung des gespeicherten Schlüssels für den entsprechenden Sensor 2 eine Authentisierung der Überwachungsmeldung durchzuführen. Schlägt die Authentisierung fehl, wird die empfangene Überwachungsmeldung verworfen.

Die Zentraleinheit 1 baut nach erfolgreicher Authentisierung zunächst eine Rückverbindung zu dem Sensor 2 auf und signalisiert, dass die Überwachungsmeldung empfangen wurde.

Die Zentraleinheit 1 baut weiterhin eine Telekommunikationsverbindung als Notrufverbindung auf. Dazu wählt die die Zentraleinheit 1 die Überwachungsgruppe 17 aus, welcher der Sensor 2, der die Überwachungsmeldung gesendet hat, angehört, und greift auf den ersten Kontakt 15 dieser Überwachungsgruppe 17 zu. Abhängig von den Kontaktparametern 16 des Kontakts 15, die hier als Verbindungsparameter 22 für den Aufbau der Notrufverbindung dienen, wird ein Telekommunikationsanschluss 5, 8 gewählt, um über den dazugehörigen Telekommunikationsdienstleister die Notrufverbindung aufzubauen. In diesem Ausführungsbeispiel wird die Notrufverbindung zu einer nicht gezeigten Notrufzentrale der Feuerwehr als Gegenstelle aufgebaut und es wird eine Telekommunikationsnachricht in der Form einer Textnachricht über die Notrufverbindung an die Notrufzentrale versendet. Die Notrufzentrale quittiert den Empfang der Textnachricht über den entsprechenden Telekommunikationsanschluss 5, 8 an die Zentraleinheit 1.

Zusätzlich baut die Zentraleinheit 1 eine weitere Notrufverbindung zu den Mobilteilen 4 auf, und sendet eine Telekommunikationsnachricht an die Mobilteile 4. Die Mobilteile 4 erzeugen daraufhin einen optischen und akustischen Alarm, um in der Umgebung befindliche Personen über das Feuer, das von dem entsprechenden Sensor 2 gemeldet wurde, zu informieren und zu warnen.

In einem anderen Beispiel wird in demselben Ausführungsbeispiel ein Sensor 2, der zur Überwachung des Gesundheitsstatus einer hilfsbedürftigen Person ausgeführt ist, aktiviert, indem die hilfsbedürftige Person einen nicht gezeigten Betätigungsknopf an dem Sensor 2 drückt. Daraufhin sendet der Sensor 2 die Überwachungsmeldung an die Zentraleinheit 1, woraufhin diese den Empfang der Überwachungsmeldung über eine Rückverbindung zu dem Sensor 2 quittiert. Der Sensor 2 zeigt daraufhin durch ein gelbes Licht an, dass die Überwachungsmeldung erfolgreich gesendet wurde. Die Zentraleinheit 1 ermittelt die Überwachungsgruppe 17 des entsprechenden Sensors 2, und startet den Aufbau der Notrufverbindung mit den Kontaktparametern 16 des ersten Kontakts 15 der Überwachungsgruppe 17. In diesem Beispiel wird die Notrufverbindung nicht erfolgreich aufgebaut, so dass die Zentraleinheit 1 den Aufbau der Notrufverbindung mit den Kontaktparametern 16 des zweiten Kontakts 15 der Überwachungsgruppe 17 initiiert. Der Aufbau der Notrufverbindung mit den zweiten ausgewählten Verbindungsparametern 22 ist erfolgreich und wird von der Gegenstelle quittiert. Von der Zentraleinheit 1 wird daraufhin eine Rückverbindung zu dem entsprechenden Sensor 2 aufgebaut und eine Kommunikationsnachricht mit der entsprechenden Quittierung der Gegenstelle übertragen. Daraufhin wechselt die Anzeige an dem Sensor 2 von Gelb auf Grün, sodass die hilfsbedürftige Person sehen kann, dass der Notruf erfolgreich durchgeführt wurde.

**Bezugszeichenliste**

| | |
|---|---|
| Zentraleinheit | 1 |
| Sensor | 2 |
| DECT-Modul, Telekommunikationsanschluss | 3 |
| Mobilteil | 4 |
| Telekommunikationsanschluss nach dem DECT-Standard | 5 |
| DECT-Basis | 6 |
| Telefonverbindung | 7 |
| Telekommunikationsanschluss über IP-Netz | 8 |
| Datenkommunikationseinheit | 9 |
| Umsetzungseinheit | 10 |
| IP-Zugangspunkt, WLAN-Router | 11 |
| Datenverbindung | 12 |
| Speichereinheit | 13 |
| Kontaktliste | 14 |
| Kontakt | 15 |
| Kontaktparameter | 16 |
| Überwachungsgruppe | 17 |
| Schlüsselspeicher | 18 |
| Energieversorgungseinheit, Akku | 19 |
| Grafische Benutzerschnittstelle | 20 |
| Symbol | 21 |
| Verbindungsparameter | 22 |
| Basissoftware | 23 |
| Treiberschicht | 24 |
| Funktionseinheit | 25 |
| Managementapplikation | 26 |

## Patentansprüche

1. Zentraleinheit (1) zur Überwachung wenigstens eines Sensors (2), wobei
die Zentraleinheit (1) als Basisstation nach dem DECT-Standard ausgeführt ist,
die Zentraleinheit (1) ein DECT-Modul (3) zum Empfang einer Überwachungsmeldung von dem Sensor (2) nach dem DECT-Standard aufweist, wobei die Zentraleinheit (1) ausgeführt ist, die Überwachungsmeldung unmittelbar von dem Sensor (2) zu empfangen,
die Zentraleinheit (1) wenigstens einen Telekommunikationsanschluss (5, 8) zur Verbindung mit wenigstens einem Telekommunikationsdienstleister und einen Speicher (13) für Verbindungsparameter (22) für den Aufbau einer Notrufverbindung zu einer Gegenstelle über den wenigstens einen Telekommunikationsdienstleister umfasst, wobei
die Zentraleinheit (1) ausgeführt ist, beim Empfang der Überwachungsmeldung die Notrufverbindung mit den verbindungsparametern (22) aufzubauen,
**dadurch gekennzeichnet, dass**
die Zentraleinheit (1) mit wenigstens einem Mobilteil (4) nach dem DECT-Standard verbindbar und eingerichtet ist, eine Telekommunikationsverbindung zwischen dem Mobilteil (4) und einer über den wenigstens einen Telekommunikationsanschluss verbindbaren Gegenstelle aufzubauen.

2. Zentraleinheit (1) nach Anspruch 1, **dadurch gekennzeichnet, dass**
die Zentraleinheit (1) einen Telekommunikationsanschluss (5) nach dem DECT-Standard zum Anschluss als Mobilteil an eine DECT-Basis (6) umfasst.

3. Zentraleinheit (1) nach einem der Ansprüche 1 oder 2, **dadurch gekennzeichnet, dass**
die Zentraleinheit (1) einen Schlüsselspeicher (18) aufweist, in dem für den Sensor (2) ein Schlüssel speicherbar ist, und die Zentraleinheit (1) ausgeführt ist, unter Verwendung des gespeicherten Schlüssels eine Authentisierung der Überwachungsmeldung durchzuführen.

4. Zentraleinheit (1) nach einem der vorhergehenden Ansprüche, **dadurch gekennzeichnet, dass**
die Zentraleinheit (1) ausgeführt ist, eine zusätzliche Notrufverbindung zu dem wenigstens einen Mobilteil (4) aufzubauen.

5. Zentraleinheit (1) nach einem der vorhergehenden Ansprüche, **dadurch gekennzeichnet, dass**
die Zentraleinheit (1) ausgeführt ist, eine Telekommunikationsnachricht über die Notrufverbindung zu versenden.

6. Zentraleinheit (1) nach einem der vorhergehenden Ansprüche, **dadurch gekennzeichnet, dass**
die Zentraleinheit (1) ausgeführt ist, eine Rückverbindung zu dem Sensor (2) aufzubauen.

7. Zentraleinheit (1) nach Anspruch 6, **dadurch gekennzeichnet, dass**
die Zentraleinheit (1) ausgeführt ist, die Rückverbindung als Reaktion auf den Empfang der Überwachungsmeldung aufzubauen.

8. Zentraleinheit (1) nach einem der vorhergehenden Ansprüche, **dadurch gekennzeichnet, dass**
die Zentraleinheit (1) eine Speichereinheit (13) für die Speicherung einer Kontaktliste (14) mit wenigstens einem Kontakt (15), der wenigstens einen Kontaktparameter (16) für den Aufbau der Telekommunikationsverbindung aufweist, umfasst und ausgeführt ist, den Kontaktparameter (16) als Verbindungsparameter (22) für den Aufbau der Notrufverbindung zu verwenden.

## Claims

1. A central unit (1) for monitoring at least one sensor (2), wherein
the central unit (1) is configured as a base station according to the DECT standard,
the central unit (1) comprises a DECT module (3) for receiving a monitoring message from the sensor (2) according to the DECT standard, wherein the central unit (1) is configured to receive the monitoring message directly from the sensor (2),
the central unit (1) comprises at least one telecommunications connection (5, 8) for connection to at least one telecommunications service provider and a memory (13) for connection parameters (22) for setting up an emergency call connection to a remote station via the at least one telecommunications service provider, wherein
the central unit (1) is configured to set up the emergency call connection with the connection parameters when the monitoring message is received,
**characterised in that**
the central unit (1) can be connected to at least one mobile part (4) according to the DECT standard and is designed to set up a telecommunications connection between the mobile part (4) and a remote station connectable via the at least one telecommunications connection.

2. The central unit (1) according to claim 1, **characterised in that**
the central unit (1) comprises a telecommunications connection (5) according to the DECT standard for connection as a mobile part to a DECT base (6).

3. The central unit (1) according to either one of claims 1 or 2, **characterised in that**
the central unit (1) comprises a key memory (18), in which a key can be stored for the sensor (2), and the central unit (1) is configured to perform an authentication of the monitoring message with use of the stored key.

4. The central unit (1) according to any one of the preceding claims, **characterised in that**
the central unit (1) is configured to set up an additional emergency call connection to the at least one mobile part (4).

5. The central unit (1) according to any one of the preceding claims, **characterised in that**
the central unit (1) is configured to send a telecommunications message via the emergency call connection.

6. The central unit (1) according to any one of the preceding claims, **characterised in that**
the central unit (1) is configured to set up a return connection to the sensor (2).

7. The central unit (1) according to claim 6, **characterised in that**
the central unit (1) is configured to set up the return connection in response to the receipt of the monitoring message.

8. The central unit (1) according to any one of the preceding claims, **characterised in that**
the central unit (1) comprises a memory unit (13) for storing a contact list (14) with at least one contact (15), which comprises at least one contact parameter (16) for setting up the telecommunications connection, and is configured to use the contact parameter (16) as connection parameter (22) for setting up the emergency call connection.

## Revendications

1. Unité centrale (1) servant à surveiller au moins un capteur (2), où
l'unité centrale (1) est conçue en tant que station de base selon la norme DECT,
l'unité centrale (1) présente un module DECT (3) pour la réception d'un message de surveillance du capteur (2) selon la norme DECT, où l'unité centrale (1) est conçue pour recevoir immédiatement le message de surveillance provenant du capteur (2),
l'unité centrale (1) comprend au moins une ligne de télécommunications (5, 8) pour la liaison avec au moins un fournisseur de services de télécommunications et une mémoire (13) pour des paramètres de connexion (22) pour l'établissement d'une connexion d'urgence vers un poste distant par le biais de l'au moins un fournisseur de services de télécommunications, où
l'unité centrale (1) est prévue, lors de la réception du message de surveillance, pour établir la connexion d'urgence avec les paramètres de connexion (22),
**caractérisée en ce que**
l'unité centrale (1) peut être reliée avec au moins une partie mobile (4) selon la norme DECT et est prévue pour établir une connexion de télécommunication entre la partie mobile (4) et un poste distant pouvant être relié par le biais de l'au moins une ligne de télécommunication.

2. Unité centrale (1) selon la revendication 1, **caractérisée en ce que**
l'unité centrale (1) comprend une ligne de télécommunication (5) selon la norme DECT pour la connexion en tant que partie mobile à une base DECT (6).

3. Unité centrale (1) selon l'une des revendications 1 ou 2, **caractérisée en ce que**
l'unité centrale (1) présente une mémoire à clé (18) dans laquelle une clé pour le capteur (2) peut être stockée, et l'unité centrale (1) est prévue pour effectuer une authentification du message de surveillance moyennant l'emploi de la clé stockée.

4. Unité centrale (1) selon l'une des revendications précédentes, **caractérisée en ce que**
l'unité centrale (1) est prévue pour établir une connexion d'urgence supplémentaire vers l'au moins une partie mobile (4) .

5. Unité centrale (1) selon l'une des revendications précédentes, **caractérisée en ce que**
l'unité centrale (1) est prévue pour envoyer un message de télécommunication par le biais de la connexion d'urgence.

6. Unité centrale (1) selon l'une des revendications précédentes, **caractérisée en ce que**
l'unité centrale (1) est prévue pour établir une connexion de réponse vis-à-vis du capteur (2).

7. Unité centrale (1) selon la revendication 6, **caractérisée en ce que**
l'unité centrale (1) est prévue pour établir la connexion de réponse en réaction à la réception du message de surveillance.

8. Unité centrale (1) selon l'une des revendications précédentes, **caractérisée en ce que**
l'unité centrale (1) comprend une unité de mémoire (13) pour le stockage d'une liste de contacts (14) avec au moins un contact (15) qui présente au moins un paramètre de contact (16) pour l'établissement de la connexion de télécommunication, et est prévue pour employer le paramètre de contact (16) en tant que paramètre de connexion (22) pour l'établissement de la connexion d'urgence.
